# EUROPEAN PATENT APPLICATION

(11) **EP 4 852 247 A1**
(43) Date of publication of application: **09.12.2026**
(21) Application number: 26166556.6
(22) Date of filing: 20.03.2026
(51) Int. Cl.: H02G 3/04, B64D 37/00, H02G 3/22

(54) **FUEL QUANTITY INDICATING SYSTEM CONNECTING ASSEMBLY**

(30) Priority: 02.06.2025 US 202519225120
(71) Applicant: The Boeing Company, Arlington, VA 22202 (US)
(72) Inventor: GROAT, John Everett, Arlington, 22202 (US); MAUE, Paul Jeremy, Arlington, 22202 (US); MACKINNON, Victoria Marie, Arlington, 22202 (US); ROBB, Andrew Michael, Arlington, 22202 (US); RAMSEY, Dustin Henry, Arlington, 22202 (US); LONG, Masako Hattori, Arlington, 22202 (US)
(74) Representative: St Clair Jones, Gregory Arthur Langley

(57) **Abstract**

A transport component for a Fuel Quantity Indicating System (FQIS) of an aircraft includes a transport element assembly (120) and a conduit assembly (140). The transport element assembly transports signals representing one or more characteristics of the fuel stored in a fuel tank formed in a wing of the aircraft. The conduit assembly fixedly attaches to a spar of the wing and at least partially sheathes the transport element assembly such that the conduit assembly and the transport element assembly extend through the spar towards a longitudinal axis A of the wing, and normal to a direction that lightning current travels on the wing when lightning strikes the aircraft.

## Description

### TECHNOLOGICAL FIELD

The present disclosure relates generally to Fuel Quantity Indicating Systems (FQIS) for aircraft, and more particularly to a transport component for an FQIS and a method for installing the transport component on the aircraft.

### BACKGROUND

Fuel Quantity Indicating Systems (FQISs) are very important systems for an aircraft. Generally, FQIS systems selectively position various probes and sensors (e.g., capacitance sensors, densitometers, temperature sensors, and the like) within the fuel tanks of the aircraft to measure various characteristics of the fuel. The sensors provide signals representing those measured characteristics over a FQIS transport element (e.g., a bus such as one or more conductive wires, cables, optical fibers, and the like) to a computing device for conversion into usable measurement data. So converted, the measurement data can then be displayed to a flight crew and/or to operations personnel via a variety of display and/or control devices.

However, installing and maintaining an FQIS system on an aircraft using conventional procedures is a complicated task. Particularly, conventional installation techniques begin by routing the FQIS transport elements starting at or near the "root" of the wing (i.e., the base of the wing that connects to the fuselage of the aircraft) and extending longitudinally through the interior of the wing towards the tip of the wing. The part of the transport elements that interface with the sensors then extends from the routed transport element in a substantially normal direction towards the leading and trailing edges of the wing to connect with the sensors.

Such conventional procedures, however, mean that installers and operations personnel must work within a confined space (i.e., the interior of the wing) to route the transport elements. Further, conventional practice installs the transport elements in the wing such that they extend substantially parallel to the direction that lightning current travels through the wing when the aircraft is struck by lightning. In this orientation, there is a greater chance that lightning current will travel through the transport elements, induce electromagnetic (EM) energy inside the fuel tank, and affect other equipment. Accordingly, conventional procedures expend a large amount of time during the design and installation phases, ensuring that the transport elements remain separated electromagnetically from various structural components in the wing.

### SUMMARY

The embodiments described herein provide a modular transport component for a Fuel Quantity Indicating System (FQIS) on an aircraft. Additionally, the embodiments described herein provide a method for installing the modular transport component on the aircraft, and for maintaining the modular transport component after it has been installed on the aircraft (e.g., while maintenance is being performed on the aircraft).

Accordingly, in a first aspect, the present disclosure provides a transport component for a Fuel Quantity Indicating System (FQIS) on an aircraft. The transport component comprises a transport element assembly configured to transport signals representing one or more characteristics of fuel stored in a fuel tank of the aircraft, wherein the fuel tank is formed in a wing of the aircraft, and a conduit assembly configured to be fixedly attached to a spar of the wing and to at least partially sheathe the transport element assembly such that the conduit assembly and the transport element assembly extend through an opening in the spar and towards a longitudinal axis of the wing.

In one aspect, the transport element assembly comprises one or more bus elements configured to carry signals. Additionally, a terminal end of each bus element includes a probe connector configured to communicatively interface the bus element to one or more FQIS sensors disposed within the fuel tank.

In one aspect, the transport element assembly further comprises a conduit liner configured to at least partially sheathe the one or more bus elements.

In one aspect, the transport element assembly further comprises a mounting plate configured to seat within a cavity formed in a mounting flange of the conduit assembly, and fixedly attach the transport element assembly to the conduit assembly.

In one aspect, the transport component further comprises a fuel seal disposed between a surface of the mounting plate and a surface of the mounting flange. In this aspect, the surface of the mounting plate and the surface of the mounting flange face each other.

In one aspect, the transport element assembly further comprises an interface transition element disposed proximate a terminal end of the transport element assembly and a connector configured to communicatively connect each of the one or more bus elements to a sensor data processing device associated with the aircraft.

In one aspect, the conduit assembly comprises a mounting flange configured to fixedly attach the conduit assembly to the spar. In such aspects, the mounting flange comprises a cavity formed to at least partially receive a mounting plate of the transport element assembly and a base conduit configured to extend through the opening in the spar and towards the longitudinal axis of the wing.

In one aspect, the conduit assembly further comprises a conduit housing that at least partially sheathes the transport element assembly.

In one aspect, the conduit assembly further comprises a conduit coupler configured to connect the conduit housing to the base conduit on the mounting flange.

In one aspect, the conduit assembly and the transport element assembly further extend through the wing in a direction that is normal to a direction of lightning current traveling through the wing.

In one aspect, the transport element assembly is configured to be inserted into, and extracted from, the conduit assembly while the conduit assembly remains fixedly attached to the spar.

In one aspect, the conduit assembly is configured to fixedly attach to one of a first spar disposed at a leading edge of the wing and a second spar disposed at a trailing edge of the wing.

A second aspect of the present disclosure provides a method of providing an aircraft with a transport component for a Fuel Quantity Indicating System (FQIS). The method in this aspect comprises fixedly attaching a conduit assembly to a spar in a wing of the aircraft such that the conduit assembly extends through an opening in the spar and towards a longitudinal axis of the wing, and inserting a transport element assembly into the conduit assembly such that the transport element assembly extends through the opening in the spar and towards the longitudinal axis of the wing, wherein the transport element assembly is configured to transport sensor signals indicating one or more characteristics of fuel stored in the wing of the aircraft.

In one aspect, inserting the transport element assembly into the conduit assembly comprises sliding the transport element assembly through an opening formed in a mounting flange of the conduit assembly.

In one aspect, inserting the transport element assembly into the conduit assembly further comprises seating a mounting plate disposed proximate a terminal end of the transport element assembly into a cavity formed in a surface of the mounting flange of the conduit assembly, and fixedly attaching the mounting plate to the mounting flange.

In one aspect, the method further comprises replacing the transport element assembly while the conduit assembly remains fixedly attached to the spar. In this aspect, replacing the transport element assembly comprises disconnecting the mounting plate from the mounting flange while the mounting flange remains fixedly attached to the spar, sliding the transport assembly out of the conduit assembly while the mounting flange remains fixedly attached to the spar, sliding a replacement transport element assembly through the opening formed in the mounting flange of the conduit assembly while the mounting flange remains fixedly attached to the spar, seating a mounting plate of the replacement transport element assembly into the cavity formed in the surface of the mounting flange, and fixedly attaching the mounting plate of the replacement transport element to the mounting flange.

In one aspect, the transport element assembly comprises one or more bus elements with each bus element having a probe connector terminating the bus element at one end. In such aspects, the method also comprises communicatively connecting the probe connector to one or more FQIS sensors disposed in a fuel tank formed in the wing of the aircraft.

In one aspect, the conduit assembly and the transport element assembly extend towards the longitudinal axis of the wing and in a direction that is normal to a direction of lightning current traveling through the wing.

A third aspect of the present disclosure provides a Fuel Quantity Indicating System (FQIS) for an aircraft. The FQIS of this aspect comprises a plurality of FQIS sensors, each of which is configured to provide signals representing one or more characteristics of fuel in a fuel tank formed in a wing of the aircraft, a display device configured to display information representing the one or more characteristics of the fuel, and one or more transport components operatively connecting the plurality of FQIS sensors to the display device. Each transport component comprises a transport element assembly configured to transport the signals provided by the plurality of FQIS sensors to a FQIS calculation device and a conduit assembly configured to be fixedly attached to a spar of the wing and to at least partially sheathe the transport element assembly such that the conduit assembly and the transport element assembly extend through an opening in the spar and towards a longitudinal axis of the wing.

In one aspect, the transport element assembly is configured to be inserted into, and extracted from, the conduit assembly while the conduit assembly remains fixedly attached to the spar. Further, each of the one or more transport components extend towards the longitudinal axis of the wing and in a direction that is normal to a direction of lightning current traveling through the wing.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
Figure 1 is an isometric diagram of an aircraft configured according to aspects of the present disclosure.
Figure 2 is a functional block diagram illustrating some of the components of a Fuel Quantity Indicating System (FQIS) for an aircraft according to aspects of the present disclosure.
Figure 3A is a schematic view of an aircraft wing illustrating an FQIS transport element assembly routed through an interior of a fuel tank disposed in a wing of an aircraft.
Figure 3B is a schematic view of an aircraft wing illustrating a plurality of separate transport components that are routed through the interior of the fuel tank, and are oriented to extend in a direction that is normal to a longitudinal axis of the aircraft wing according to aspects of the present disclosure.
Figure 4 is a perspective view illustrating a transport component extending through a spar and along a rib according to aspects of the present disclosure.
Figure 5A is a perspective view illustrating a transport element assembly configured according to aspects of the present disclosure.
Figure 5B is a magnified view of a terminal end of a transport element assembly configured according to aspects of the present disclosure.
Figure 6A is a perspective view illustrating a conduit assembly configured according to aspects of the present disclosure.
Figure 6B is a perspective view illustrating the transport element assembly installed within the conduit assembly of a FQIS component assembly according to aspects of the present disclosure.
Figure 6C is a perspective view illustrating how an FQIS component assembly attaches to a spar of an aircraft according to aspects of the present disclosure.
Figure 7 is a flow diagram illustrating a method for installing an FQIS component assembly on an aircraft according to aspects of the present disclosure.
Figure 8 is a flow diagram illustrating a method for replacing an FQIS component assembly on an aircraft according to aspects of the present disclosure.

### DETAILED DESCRIPTION

The present disclosure provides a transport component for a Fuel Quantity Indicating System (FQIS) on an aircraft, as well as a method for installing the transport component, and for maintaining the transport component after installation on the aircraft.

In more detail, an aircraft configured according to the present disclosure comprises a plurality of transport components installed in the fuel tanks formed in its wings. Each transport component is a modular unit comprising a transport element assembly and a separate, independent conduit assembly that at least partially sheathes the transport element assembly. Further, each transport component is installed in the wing such that it extends in a direction that is substantially normal to the direction that lightning current travels on the wing. The modular nature of the FQIS components also enables manufacturers to separately install the conduit assembly and the transport assembly of the transport component on the aircraft at different times during the manufacturing/production process. Therefore, the transport components configured according to the present aspects are specifically designed to greatly simplify the procedures for installing, and later for maintaining, the FQIS on the aircraft.

For example, as will be described in more detail below, the conduit assembly part of the transport component is installed on the aircraft early in the production process (e.g., such as when the wings are being built and prior to the second wing skin being attached). Once the conduit assembly is installed, the transport element assembly part of the transport component can be installed on the aircraft. However, due in part to the modular design of the transport component, the transport element assembly can be installed later in the production process (e.g., after the aircraft wings are built and attached to the fuselage) simply by sliding the transport element assembly into the already-installed conduit assembly. In at least one aspect, the conduit assembly and the transport element assembly are attached to the ribs in the wing of the aircraft and/or are routed to extend substantially parallel to the ribs in the wing of the aircraft. Such routing is advantageous. Particularly, because the metallic ribs are highly conductive, they greatly reduce the electromagnetic field that might affect the transport elements. Further, there is a one-to-one correspondence between the transport component and a FQ sensor disposed in the wing of the aircraft, thereby making the installation and maintenance of the FQIS in general, and of the transport component in particular, more efficient and cost effective.

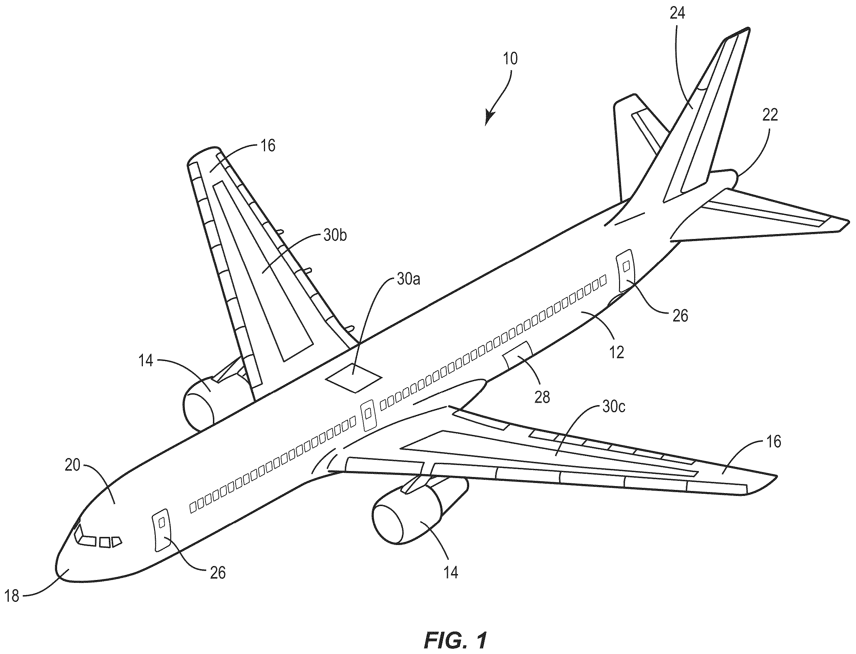

Turning now to the drawings, Figure 1 illustrates an aircraft 10, configured according to aspects of the present disclosure, to transport passengers and/or cargo. As seen in Figure 1, aircraft 10 generally includes a fuselage 12 with an interior space configured to accommodate passengers and/or cargo. Engines 14 are mounted on the wings 16 on opposite sides of the fuselage 12. A forward end 18 of the fuselage 12 includes a flight deck 20 with various controls to enable flight personnel to control and monitor the many operations of, and associated with, aircraft 10. An aft end 22 of the fuselage 12 includes a tail section 24. One or more doors 26 are positioned along a side of aircraft 10 to enable ingress and egress of people and cargo into and out of aircraft 10. Landing gear 28 is mounted at the bottom of the fuselage 12 and is movable between a stowed position and a deployed position.

One or more fuel tanks 30a, 30b, 30c (collectively referred to herein as "fuel tanks 30") store fuel that is used by the engines 14. The fuel tanks 30 can be mounted at various positions within the aircraft 10 including, but not limited to, within the fuselage 12 and/or wings 16. Figure 1 includes an example illustrating a center fuel tank 30a positioned in the fuselage 12 and wing fuel tanks 30b, 30c that are positioned in, and aligned with, the port and starboard side wings 16, respectively.

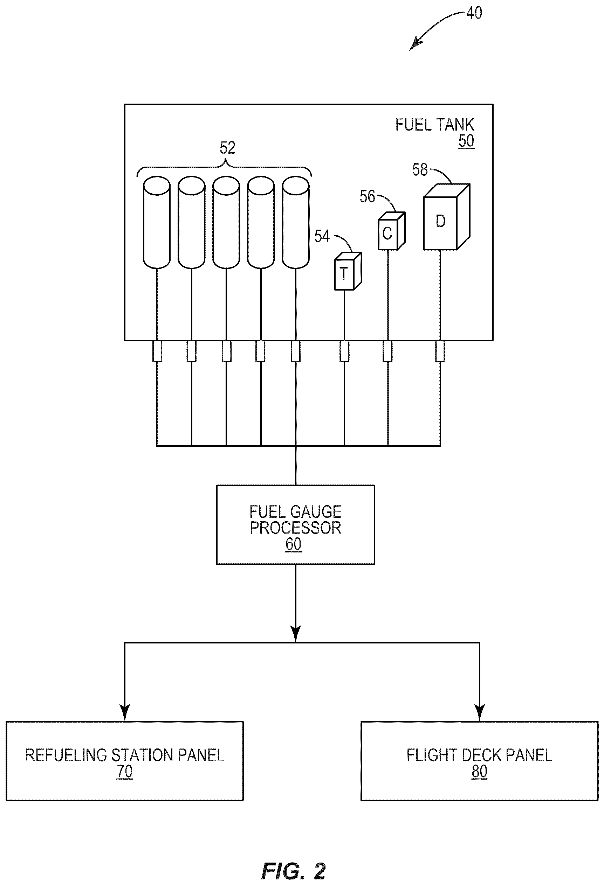

As previously stated, aircraft 10 also includes an FQIS that monitors and displays information related to the fuel in its fuel tanks. Figure 2, for example, is a functional block diagram illustrating some components of an exemplary FQIS 40. Such components include, *inter alia,* a fuel tank 50, a fuel gauge processor 60, a refueling station panel 70, and a flight deck panel 80.

Generally, fuel tank 50 comprises a plurality of closely installed, fuel quality (FQ) sensors for measuring the quantity and/or quality of the fuel onboard aircraft 10. As seen in Figure 2, such FQ sensors include, for example, a plurality of fuel height sensors 52, a temperature sensor 54, a compensator 56, and a densitometer 58.

In some technological fields, fuel height sensors 52 are commonly referred to as capacitive sensors and detect changes in capacitance to sense the height of the fuel within the fuel tank 50. To accomplish this function, fuel height sensors 52 monitor the changes in the dielectric properties of the fuel as the fuel tank 50 fills with and empties the fuel. So monitored, fuel height sensors 52 output electrical signals (i.e., "raw" sensor data) representing those changes in capacitance. Similarly, densitometer 58 is a sensor configured to measure the density of the fuel in fuel tank 50. Generally, although each of the one or more fuel tanks 50 on aircraft 10 have multiple fuel height sensors 52, each tank typically only has one temperature sensor 54, one compensator 56, and one densitometer 58.

The temperature sensor 54 monitors the temperature of the fuel in tank 50. As known by those of ordinary skill in the art, the temperature of the fuel can vary with the ambient temperature, the altitude, and the heat emitted by engines 14. Therefore, the temperature sensor 54 periodically measures the temperature of the fuel and reports those temperatures to the flight deck 20 and/or other devices and systems associated with aircraft 10. Not only do such measurements help optimize the delivery of the fuel to the engines 14, but they also facilitate safe fuel operations and help prevent issues with the aircraft's engines 14. Such issues may include, but are not limited to, determining when the fuel is too hot or too cold.

The compensator 56, which may be, for example, a capacitance compensator, is a device configured to correct for variations in fuel density and the dielectric constant to ensure accurate fuel quantity readings. In more detail, both the fuel density and the dielectric constant can vary according to a variety of factors such as variations in temperature, the type of fuel being used by aircraft 10, and the additives in the fuel (e.g., the chemical makeup of the fuel). Compensator 56 therefore measures the dielectric constant and uses that measured value to normalize the measurements output by the fuel height sensors 52. So compensated, the measurements output by the fuel height sensors 52 are more precise, thereby ensuring more accurate fuel quantity calculations, and ultimately, a more precise indication of the quantity of fuel in tank 50.

Regardless of their particular functions, however, each of the fuel height sensors 52, the temperature sensor 54, the compensator 56, and the densitometer 58 output respective raw sensor data (i.e., electrical signals representing raw capacitance, dielectric, density, and temperature measurement data) along a transport element (e.g., a bus such as one or more conductive wires, cables, optical fibers, and the like) to a computing device (e.g., a sensor data processing device) such as a fuel gauge processor 60. In operation, the fuel gauge processor 60 (and/or another computing device) converts the raw sensor data provided by sensors 52, 54, 56, and 58 into (typically) numerical values (herein referred to as "sensor data") that are usable for calculating the amount of fuel in tank 50 and displaying that information to different personnel.

By way of example only, the fuel gauge processor 60 may output information indicating the characteristics of the fuel in fuel tank 50 to one or more refueling station panels 70 and/or a flight deck panel 80 for display. As is known in the art, a refueling station panel 70 can be installed anywhere on aircraft 10 but is typically installed on an external surface of the wing (e.g., underneath wing 16 and proximate the leading edge of wing 16). This enables operations personnel, such as refuelers, for example, to determine the amount of fuel in each of the plurality of fuel tanks 50 onboard aircraft 10 during refueling operations. The fuel gauge processor 60 may also output the information indicating the characteristics of the fuel in fuel tank 50 to a flight deck panel 80. Flight deck panel 80 is located on the flight deck 20 of aircraft 10 and allows personnel on the flight deck (e.g., the flight crew) to determine, and in some cases verify, the amount of fuel in fuel tank 50.

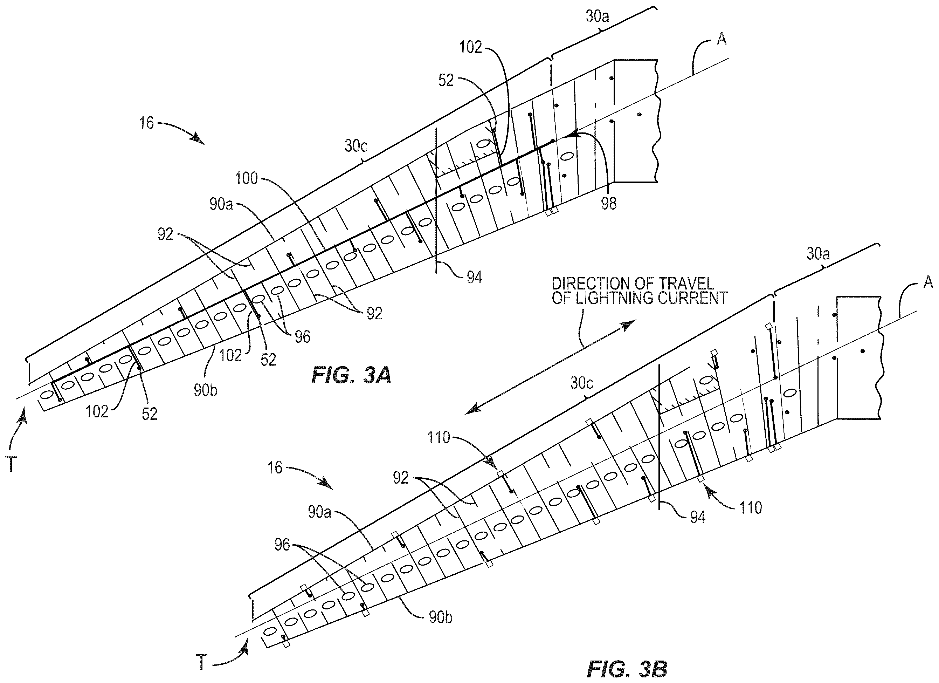

Figure 3A is a schematic view of an aircraft illustrating an existing FQIS transport assembly 100 conventionally routed through an interior of a fuel tank 50 formed in a wing 16 of aircraft 10. Structurally, as seen in Figure 3A (and in Figure 3B), wing 16 comprises front and rear spars 90a, 90b, respectively, and a plurality of ribs 92. A support strut 94 may also exist to help support the weight of an engine 14 on wing 16.

Spars 90a, 90b typically extend along the length of wing 16 (i.e., "span-wise") proximate the leading edge (i.e., front spar 90a) and the trailing edge (i.e., rear spar 90b) of wing 16. As is known in the art, spars 90a, 90b, which may, for example, be manufactured from metal, metal alloy, or a composite material, are the primary structural beams used to bear the flight load and support the weight of wing 16. Ribs 92 are structural cross-members extending from and between the front and rear spars 90a, 90b of wing 16. Functionally, ribs 92 provide further structural support for wing 16, help give the wing its shape and help stabilize the skin on wing 16 by resisting the shear and compressive forces that act on wing 16 during flight.

Additionally, although not specifically seen in the figures, wing 16 typically comprises a plurality of stiffening members referred to as "stringers." Stringers, which are known in the art, extend the length of wing 16 through openings formed in ribs 92 and are responsible for transferring loads exerted on the skin of the wing 16 to the spars 90a, 90b and ribs 92. Together, spars 90a, 90b, ribs 92, and stringers (not shown) form the skeletal structure that supports wing 16.

As previously described, installing a conventional FQIS transport assembly 100 according to conventional procedures is a complicated, time-consuming, and difficult procedure. Such difficulties are due, at least in part, to the confined space inside the wing 16. Specifically, the interior of wing 16 forms a fuel tank 50 that stores the fuel provided to engines 14. In Figures 3A and 3B, fuel tank 50 is disposed in wing 16 and represents fuel tank 30c seen in Figure 1. Conventionally, the FQIS transport assembly 100 is routed through the interior of wing 16 starting from the "root" 98 of wing 16 (i.e., where wing 16 attaches to fuselage) and extending along a line, represented herein by longitudinal axis A of wing 16, towards the tip *T* of wing 16. As seen in Figures 3A-3B, the longitudinal axis A extends in a direction that is normal to the front and rear spars 90a, 90b. Elements 102 of the FQIS transport assembly 100, which as stated above may comprise a bundled wiring or optical fiber bus, then "branch off" at certain points along the wing to electrically interface with one of the sensors 52, 54, 56, 58 disposed in fuel tank 50.

Thus, installing the FQIS transport assembly 100 along with its elements 102 can be quite problematic and costly. Particularly, to route the FQIS transport assembly 100 and its multiple branch elements 102, conventional installation procedures require installers and operations personnel to work within the confined space of the wing 16 (i.e., after the skin has been installed on the wing 16). To accomplish this task, the installation and operations personnel must be able to access the FQIS transport assembly 100 and branch elements 102 via one or more of the plurality of access panels 96 formed on wing 16. Further, FQIS transport assemblies 100 are quite frequently damaged and have to be replaced. Therefore, the process of installing an FQIS transport assembly 100 along with its elements 102 is very likely to be performed quite often.

Despite such access, though, installing the FQIS transport assembly 100 through wing 16 via access panels 96 is very cumbersome and requires many man-hours to complete. Additionally, as previously described, the FQIS transport assembly 100 is conventionally routed to extend through wing 16 in a direction that is substantially parallel to the direction that lightning current travels when aircraft 10 is struck by lightning. Accordingly, a large amount of time is spent designing, installing, and configuring the FQIS transport assembly 100 to ensure that an appropriate distance separating the FQIS transport assembly 100 from the internal structural components of wing 16 is maintained.

As seen in Figure 3B, however, the present disclosure addresses these and other issues by replacing the conventional FQIS transport assembly 100 with a plurality of modular transport components 110 configured according to the present disclosure. Additionally, due at least in part to the modular structure, the present disclosure provides a method for installing and maintaining the assemblies that comprise the transport components 110. The method described herein greatly minimizes the damage that may occur during the installation process, makes replacement of the transport components 110 much easier, and limits the exposure that operations personnel have to the confined zones inside the wing 16 of aircraft 10.

Specifically, Figure 3B is a schematic view of a wing 16 illustrating a plurality of modular transport components 110. As will be described later in more detail, each transport component 110 is itself an assembly of multiple assemblies. Further, each transport component 110 is fixedly attached to either the front spar 90a or the rear spar 90b and is oriented to extend from spar 90a or 90b towards the longitudinal axis A of wing 16. So oriented, each of the transport components 110 extend in a direction that is normal to the direction that lightning current travels when aircraft 10 is struck by lightning. Thus, lightning current is much less likely to follow the path of the transport components 110 into fuel tank 50 and eliminate or at least substantially reduce lightning as an ignition source.
In one aspect, the transport components 110 attaches to and/or extends parallel to a metallic rib inside the wing of the aircraft 10. The metallic ribs, which may be manufactured from aluminum, for example, are highly conductive and greatly reduce the electromagnetic field when coupled to the transport components 110.

The modular design of the transport component 110 not only facilitates and improves the installation of the FQIS as a whole on aircraft 10 but it also facilitates and improves maintenance on aircraft 10 after delivery. Particularly, the modular construction of transport component 110 greatly simplifies the install and uninstall procedures and negates the need to remove and replace entire bundles of wires, such as those comprising the conventional FQIS transport assembly 100 of Figure 3A. In some aspects, for example, the amount of time required to replace or repair a transport component 110 of the present disclosure is a few hours. In contrast, replacing or repairing a conventionally installed FQIS transport assembly 100 requires an entire day. Moreover, the design of the transport components 110 minimizes the exposure that installation and/or operations personnel have to the confined space inside the wing 16 and particularly reduces or eliminates the need for these personnel to enter, crawl into, and/or reach around inside the wing 16 through, for example, one of the access panels 96.

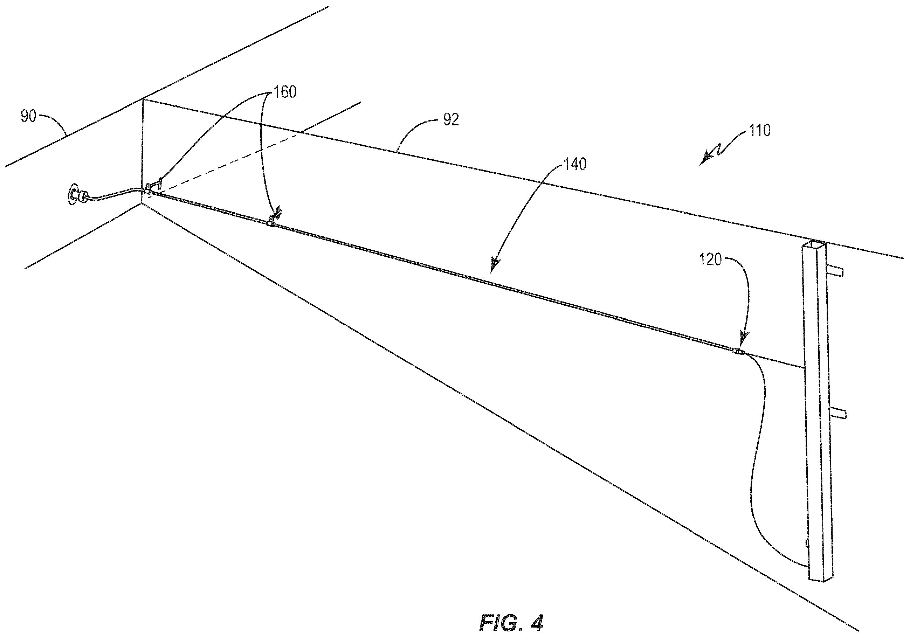

Figure 4 is a perspective view of a transport component 110 configured according to aspects of the present disclosure and installed within the fuel tank 50 of wing 16. As seen in Figure 4, transport component 110 is a modular component comprising both a transport element assembly 120 and a protective conduit assembly 140. One or more brackets 160 fixedly attach the protective conduit assembly 140, and thus, the transport component 110, to a rib 92 or some other structural component in wing 16. According to the present disclosure, each transport element assembly 120 is interchangeable with itself, meaning that a transport element assembly 120 already installed in wing 16 can be removed and replaced with another transport element assembly 120. Similarly, conduit assembly 140 is also interchangeable with itself, and thus, conduit assemblies 120 can also be removed and replaced with other conduit assemblies 120. This modular design beneficially partitions the functional structure of transport component 110 into manageable, independent functional structures that are more flexible, adaptable, and easier to install and maintain than conventional FQIS transport assemblies 100.

More particularly, the conduit assembly 140 is configured to be installed on the wing 16 at a very early stage of aircraft 10 production (e.g., before the skin is installed on wing 16). Thus, while wing 16 may have most or all of its skeletal structure (e.g., spars, ribs, stringers, etc.) in place, the absence of the skin means that the interior of wing 16 is substantially "open" and not confined by the skin. In this "open" environment, personnel are able to easily and quickly install the conduit assembly 140 rather than having to install the conduit assembly 140 while being constrained by the aircraft skin, the spars 90a, 90b, the ribs 92, and the like (i.e., in a confined space). The transport element assembly 120, which is specifically configured to slide into and out of the conduit assembly140, can then be installed later in the production process (e.g., after the skin on wing 16 has been installed).

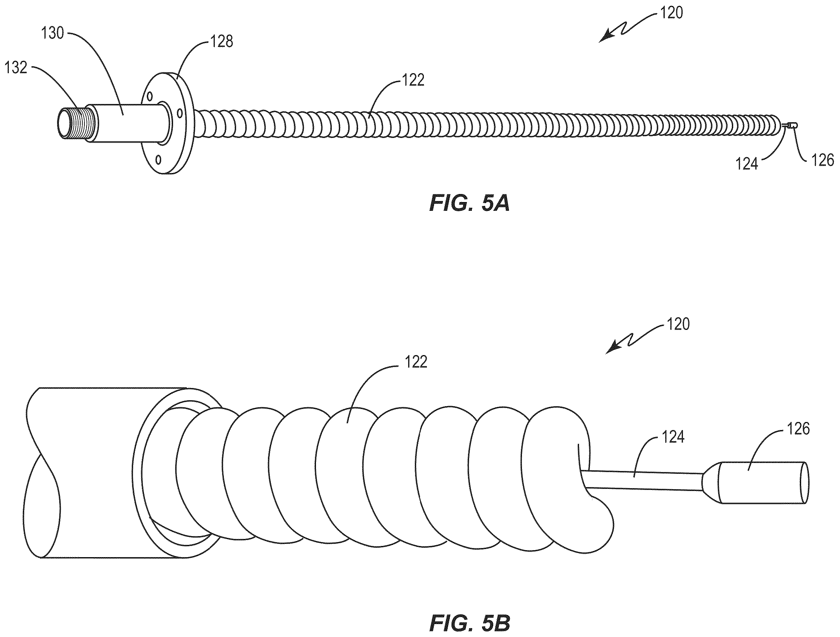

Particularly, as seen in more detail below, the transport element assembly 120 comprises a probe connector (e.g., seen in Figures 5A-5B) specifically configured to communicatively interface with sensors 52, 54, 56, and 58. In one aspect, for example, the probe connector is configured to connect directly to one of the sensors (e.g., a fuel height sensor 52). In another example, the probe interface is configured to indirectly connect to sensors 52, 54, 56, 58 by communicatively connecting to a "hub" that is itself communicatively connected to sensors 52, 54, 56, 58. Regardless of the particular connection, though, the transport element assembly 120 comprises a bus (e.g., conductive wires, optical fibers, and the like) that carries the raw sensor data provided by sensors 52, 54, 56, 58 to the fuel gauge processor 60. So received, the fuel gauge processor 60 (or other computing device) converts the raw sensor data into usable measurement data that can be subsequently displayed to a user and processed by other computer systems associated with aircraft 10.

Figures 5A and 5B are perspective views illustrating a transport element assembly 120 configured according to aspects of the present disclosure. Figure 5B particularly illustrates a magnified view of the probe connector interface end of the transport element assembly 120. As seen in these figures, transport element assembly 120 comprises a conduit liner 122, a bus element 124 (e.g., a conductive wire or optical fiber), a probe connector 126 attached to a terminal end of the bus element 124, a mounting plate 128, a interface transition element 130, and an element connector 132 configured to communicatively connect the bus element 124 and the sensors 52, 54, 56, 58 to various processing circuits associated with aircraft 10 via one or more transport elements (e.g., a wired or optical fiber bundle). By way of example only, such processing circuits include, but are not limited to, the fuel gauge processor 60. Additionally, interface transition element 130 may comprise, but is not limited to, a resistor that alters impedance, a conductor connected to ground, a suppressor such as a Transient Voltage Suppressor (TVS), and the like.

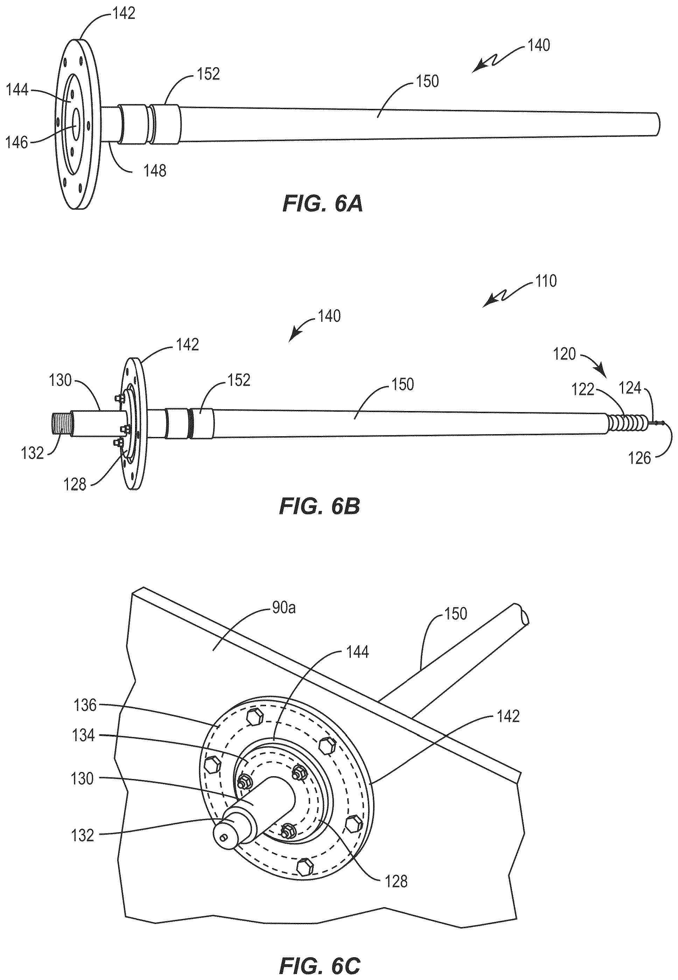

In this aspect, conduit liner 122 comprises a helically-shaped or coiled flexible tube that wraps around all or substantially all of the length of the bus element 124. Such flexibility enables the transport element assembly 120 to be installed inside the hollow tube 150 of conduit assembly 140 (Figure 6A), which can be straight or curved to maximize close routing to rib 92, such that it can follow the path of rib 92. Additionally, in this aspect, conduit liner 122 is a hollow tube. However, those of ordinary skill in the art should readily appreciate that the disclosure does not limit conduit liner 122 to this specific structure. In other aspects, for example, conduit liner 122 comprises a plastic sheath or casing or that covers all or substantially all of the length of the bus element 124. Regardless of its particular shape and characteristics, though, conduit liner 122 is configured to help protect bus element 124 while still allowing the bus element 124 to bend, flex, expand, and contract. Such a configuration for a flexible conduit liner 122 advantageously facilitates both the installation and maintenance of the transport element assembly 120, while also protecting the transport element assembly 120 during shipping, installation, and maintenance procedures.

The bus element 124 comprises a flexible wire(s) or optical fiber(s) that extend through the flexible conduit liner 122 between the connecting assembly element connector 132 and the probe connector 126. In operation, the probe connector 126 communicatively connects bus element 124 to sensors 52, 54, 56, 58 either directly or indirectly via the hub. So connected, the raw sensor data output by sensors 52, 54, 56, 58 is received at probe connector 126. Bus element 124 then transports that raw sensor data to fuel gauge processor 60 (or other computing device) via element connector 132 for conversion to usable measurement data.

Mounting plate 128, which is best seen in Figure 5A, comprises a rigid member constructed from a metal, metal alloy, or composite material, for example. In this aspect, mounting plate 128 is fixedly attached to the circumferential external surface of interface transition element 130, and is positioned on transport element assembly 120 between a terminal end of conduit liner 122 and element connector 132. Although the present disclosure does not limit mounting plate 128 to any specific shape, the mounting plate 128 of this aspect is generally circular. Other shapes are also possible so long as the mounting plate 128 seats at least partially within a cavity 144 formed in a surface of a mounting flange 142 of conduit assembly 140, as seen in Figures 6A-6C. Regardless of its shape, mounting plate 128 is particularly configured to facilitate the quick and easy mechanical connection and disconnection of the transport assembly 120 to and from the conduit assembly 140, as will be seen in more detail below.

Figures 6A-6C are perspective views illustrating the conduit assembly 140 (Figure 6A), the transport element assembly 120 mated with the conduit assembly 140 to form the transport component 110 (Figure 6B), and a magnified view illustrating the transport element assembly 120 mated with the conduit assembly 140 (Figure 6C). Additionally, Figure 6C illustrates how the conduit assembly 120 fixedly attaches to spar 90a in one aspect so that the transport component 110 is oriented in a direction towards a line (i.e., represented herein by the longitudinal axis A of wing 16) and normal to the direction of lightning current when that current travels on wing 16.

As seen in Figure 6A, conduit assembly 140 comprises a mounting flange 142, a cavity 144 or depression formed in a first surface of mounting flange 142, a central opening 146, and a base tube 148. Additionally, conduit assembly 140 also comprises a hollow tube 150, which may be straight or curved along all or part of its length, that securely attaches to base tube 148 via a coupler 152. In one aspect, the coupler 152 is further configured to connect multiple hollow tubes 150 together to allow for straight or curved shaping for routing the hollow tubes 150 along rib 92. Functionally, the hollow tube 150 and the conduit liner 122 protect the transport element 124 during installation and removal procedures.

According to the present aspects, the fully assembled conduit assembly 140 and transport assembly 120 are designed to have a fuel seal at 128, 130, 132, and 142. Additionally, in at least some aspects, hollow cylindrical tube 150 is porous. That is, tube 150 may comprise a plurality of drain holes formed thereon along some or all of its length to allow fluids (e.g., water) to escape and ice to expand. To facilitate a secure attachment between tube 150 and coupler 152 (and/or between base tube 148 and coupler 152), one aspect of the present disclosure forms threads on the exterior surfaces of base tube 148 and tube 150 proximate their terminal ends, and corresponding threads on the interior sidewalls of coupler 152. So formed, the thread formed on the interior sidewall of coupler 152 can connect to the base tube 148 and tube 150 by threadingly engaging the corresponding threads formed on the exterior surfaces of base tube 148 and tube 150. Other means of fixedly attaching the coupler 152 to both the base 158 and tube 150 are also possible.

In this aspect, mounting flange 142 comprises a rigid member that may be manufactured, for example, from an appropriate metal, metal alloy, or composite material. As stated above, a cavity 144 is formed in a first surface of mounting flange 142 and is shaped and sized to receive the mounting plate 128 of the transport element assembly 120. Particularly, as seen in Figures 6A-6C, the conduit assembly 140 extends through an opening formed in a spar, such as spar 90a (Figure 6C). So placed, the mounting flange 142 can be fixedly attached to spar 90a using, for example, any of a variety of mechanical fasteners, such as bolts or rivets. The transport element assembly 120 can then be inserted into the "already-installed" conduit assembly 140 through opening 146 formed in mounting flange 142 and slid into conduit assembly 140 until mounting plate 128 seats at least partially within cavity 144. So seated, the mounting plate 128 is fixedly attached to the mounting flange 142 using appropriate mechanical fasteners, such as rivets or bolts for example (e.g., Figures 6A-6B).

As previously stated, the conduit assembly 140 and the transport element assembly 120, when assembled, extend through a fuel tank 50 formed in an interior of wing 16. To prevent fuel leakage, one or both of these components may be fuel-sealed using seals 134, 136 (Figure 6C). In one aspect, for example, seal 136 is positioned between a contact surface of mounting flange 142 and an opposing contact surface of spar 90a. Similarly, seal 134 is positioned between a contact surface of mounting plate 128 and a corresponding opposing contact surface formed by the cavity 144 of mounting flange 142. So positioned, seals 134 and 136 prevent fuel from leaking out of fuel tank 50 while also preventing moisture and other contaminants from entering fuel tank 50.

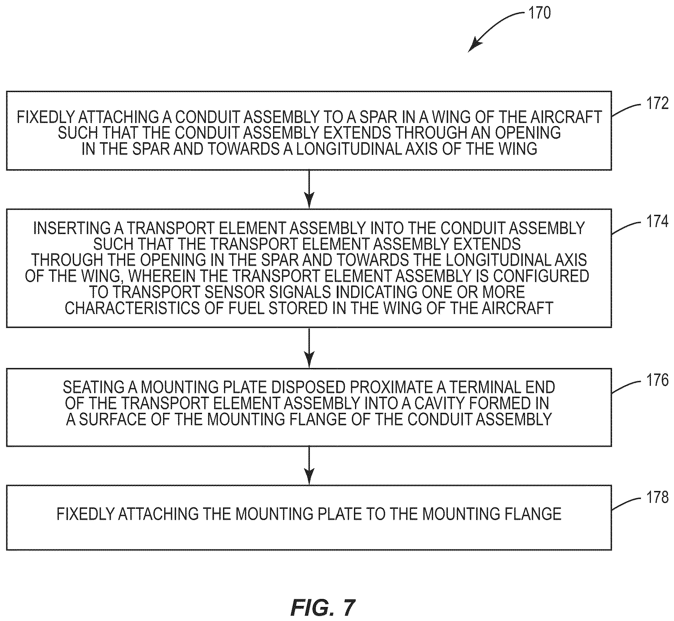

Figure 7 is a flow diagram illustrating a method 170 for installing transport component 110 on an aircraft 10 according to one aspect of the present disclosure. As previously described, the transport component 110 itself is an assembly comprising a conduit assembly 140, such as that illustrated in Figures 6A-6C, and a transport element assembly 120, such as seen in Figures 5A-5B.

As seen in Figure 7, installation of the transport component 110 begins when aircraft 10 is being built. For example, prior to the skin being installed on wing 16, installers fixedly attach a conduit assembly 140 to a spar (e.g., spar 90a or 90b) in the wing of aircraft 10 (box 172). Particularly, the installer inserts the base tube 148 of conduit assembly 140 into an opening in the spar such that the base tube 148 of conduit assembly 140 extends through the spar and towards a longitudinal axis A of wing 16. The installer can then attach the mounting flange 142 of conduit assembly 140 to the spar using any of a variety of appropriate mechanical fasteners. So attached, the installers then attach the hollow tube 150 to the base tube 148 via coupler 152, as previously described. Additionally, the installer attaches the hollow tube 150 to one or more of the ribs 92 using brackets 160. So connected, the conduit assembly 140 is fixedly attached to the skeletal structure of aircraft 10. As previously described, seal 136 is positioned between the contacting surfaces of mounting flange 142 and spar 90a to prevent fuel tank 50 from leaking when it is filled with fuel.

Next, the installer inserts the transport element assembly 120 into the conduit assembly 140 such that the transport element assembly 120 also extends through the opening formed in the spar and towards the longitudinal axis A of wing 16 (box 174). As previously described, the transport element assembly 120 is configured to transport raw sensor data (i.e., sensor signals indicating one or more characteristics of fuel stored in the wing of the aircraft) output by sensors 52, 54, 56, 58 to fuel gauge processor 60. Therefore, the probe connector 126 is connected to the sensor output. In one aspect, probe connector 126 interfaces directly with a sensor 52, 54, 56, 58. In another aspect, however, probe connector interfaces with a sensor 52, 54, 56, 58 indirectly via hub.

In this aspect, the transport element assembly 120 is inserted into the conduit assembly 140 until the mounting plate 128 seats in cavity 144 formed in mounting flange 142 (box 176). As stated above, a seal 134 may be disposed between the mounting plate 128 and the mounting flange 142 to prevent leaks from fuel tank 50 when filled with fuel. So positioned, the installer fixedly attaches mounting plate 128 to mounting flange 142 (box 178).

In one aspect, inserting the transport element assembly 120 into the conduit assembly 140 comprises sliding the transport element assembly 120 through an opening 146 formed in mounting flange 142 of conduit assembly 140.

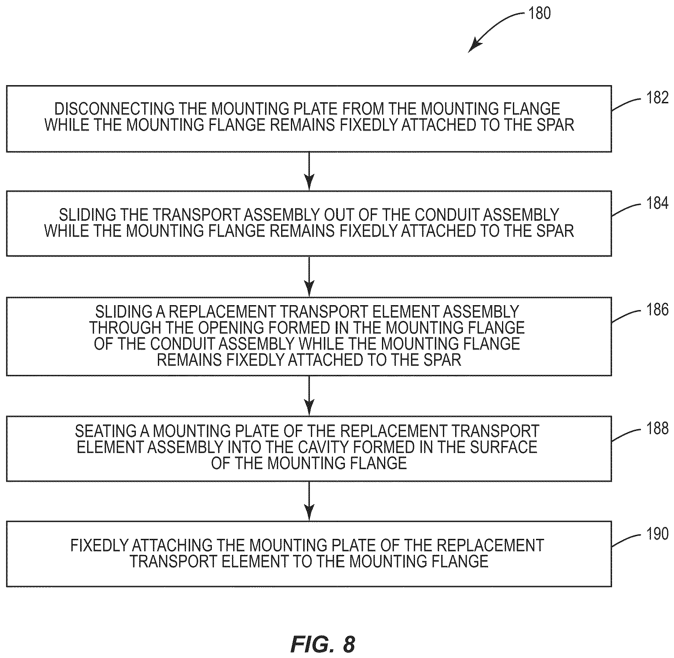

Figure 8 is a flow diagram illustrating a method 180 for replacing a transport element assembly 120 that has already been installed on aircraft 10 according to aspects of the present disclosure. As stated above, replacing the transport element assembly 120 with another transport element assembly 120 occurs in connection with a maintenance event after aircraft 10 has been delivered. Additionally, according to the present aspects, the procedure for replacing the transport element assembly 120 is performed while conduit assembly 140 remains fixedly attached to spar 90a.

As seen in Figure 8, method 180 begins with operations personnel disconnecting the mounting plate 128 from the mounting flange 142 while the mounting flange 142 remains fixedly attached to spar 90a (box 182). Additionally, the operations personnel disconnect the probe connector 126 from its corresponding sensor 52, 54, 56, or 58 or from the hub. For example, the operations personnel may disconnect the probe connector 126 from sensor 52, 54, 56, 58 or the hub via one of the access panels 96 formed in wing 16.

Once disconnected, the operations personnel extract the transport element assembly 120 from the conduit assembly 140 by sliding it out of the conduit assembly 140 while the conduit assembly 140 remains fixedly attached to the spar (box 184). So removed, the operations personnel slide the replacement transport element assembly 120, leading with probe connector 126, through the opening 146 formed in the mounting flange 142 of the conduit assembly 140 while the mounting flange 142 remains fixedly attached to spar 90a (box 186). The operations personnel then seat the mounting plate 128 of the replacement transport element assembly 120 into the cavity 144 formed in the surface of the mounting flange 142 (box 188) and connects probe connector 126 to a corresponding sensor 52, 54, 56, 58 or hub. Once seated, the operations personnel can fixedly attach the mounting plate 128 of the replacement transport element assembly 120 to the mounting flange 142 using mechanical fasteners, as previously described (box 190).

It should be noted that the transport element assembly 120, as described above, comprises a single bus element 124 (e.g., a wire, cable, or optical fiber). However, this is merely for clarity and ease of discussion. In at least one aspect of the present disclosure, the transport element assembly 120 comprises one or more bus elements 124. In these aspects, each bus element 124 has a corresponding probe connector 126 terminating the bus element 124 at one end and, in at least one aspect, is communicatively connected to a corresponding sensor 52, 54, 56, 58 or hub disposed in the fuel tank 50 formed in wing 16.

In aspects of the present disclosure, the conduit assembly 140 and the transport element assembly 120, when installed in wing 16, extend towards the longitudinal axis A of wing 16 in a direction that is normal to a direction of lightning current traveling through the wing 16.

The transport component 110 described herein provides benefits and advantages that conventional FQIS components do not or cannot provide. In particular, the modular nature of the transport component 110 simplifies the installation and assembly of the transport elements (i.e., the bus elements 124) in the fuel tank 50. Further, the time that installation and/or operations personnel must spend in the confined space of wing 16 installing and/or replacing the transport elements is minimized, and in some situations, eliminated. Thus, not only do the present aspects reduce the costs of installation and maintenance but they also improve the installation and maintenance procedures. Additionally, due to its modular nature, the transport component 110 is also easily maintainable after it has been installed.

Further, even though a transport component 110 configured according to the present disclosure has more tank installation parts, the overall initial cost of the transport component 110 should decrease because the constituent parts of the transport component 110 are in their simplest form. Thus, many such transport components 110 can be configured substantially identical to each other rather than being combined into a single unitary part.

Additionally, the transport component 110 and its constituent assemblies 120, 140 are both mechanically simple (e.g., comprising few parts) and reliable. Such factors facilitate production assembly, help to reduce or minimize the time installers and operations personnel must spend in the confined space of wing 16, and increase the maintainability of aircraft 10 in general, and of the FQIS in particular.

The present aspects may, of course, be carried out in other ways than those specifically set forth herein without departing from essential characteristics of the disclosure. The present aspects are to be considered in all respects as illustrative and not restrictive, and all changes coming within the meaning and equivalency range of the appended claims are intended to be embraced therein.

The description includes the following clauses:
1. A transport component for a Fuel Quantity Indicating System (FQIS) on an aircraft, the transport component comprising:
   a transport element assembly configured to transport signals representing one or more characteristics of fuel stored in a fuel tank of the aircraft, wherein the fuel tank is formed in a wing of the aircraft; and
   a conduit assembly configured to be fixedly attached to a spar of the wing and to at least partially sheathe the transport element assembly such that the conduit assembly and the transport element assembly extend through an opening in the spar and towards a longitudinal axis A of the wing.
2. The transport component of clause 1, wherein the transport element assembly comprises one or more bus elements configured to carry signals, and wherein a terminal end of each bus element includes a probe connector configured to communicatively interface the bus element to one or more FQIS sensors disposed within the fuel tank.
3. The transport component of clause 2, wherein the transport element assembly further comprises a conduit liner configured to at least partially sheathe the one or more bus elements.
4. The transport component of clause 3, wherein the transport element assembly further comprises a mounting plate configured to:
   seat within a cavity formed in a mounting flange of the conduit assembly; and
   fixedly attach the transport element assembly to the conduit assembly.
5. The transport component of clause 4, further comprising a fuel seal disposed between a surface of the mounting plate and a surface of the mounting flange, wherein the surface of the mounting plate and the surface of the mounting flange face each other.
6. The transport component of clause 4 or clause 5, wherein the transport element assembly further comprises an interface transition element disposed proximate a terminal end of the transport element assembly and a connector configured to communicatively connect each of the one or more bus elements to a sensor data processing device associated with the aircraft.
7. The transport component of any preceding clause, wherein the conduit assembly comprises a mounting flange configured to fixedly attach the conduit assembly to the spar, the mounting flange comprising:
   a cavity formed to at least partially receive a mounting plate of the transport element assembly; and
   a base conduit configured to extend through the opening in the spar and towards the longitudinal axis of the wing.
8. The transport component of clause 7, wherein the conduit assembly further comprises a conduit housing that at least partially sheathes the transport element assembly.
9. The transport component of clause 8, wherein the conduit assembly further comprises a conduit coupler configured to connect the conduit housing to the base conduit on the mounting flange.
10. The transport component of any preceding clause, wherein the conduit assembly and the transport element assembly further extend through the wing in a direction that is normal to a direction of lightning current traveling through the wing.
11. The transport component of any preceding clause, wherein the transport element assembly is configured to be inserted into, and extracted from, the conduit assembly while the conduit assembly remains fixedly attached to the spar.
12. The transport component of any preceding clause, wherein the conduit assembly is configured to fixedly attach to one of a first spar disposed at a leading edge of the wing and a second spar disposed at a trailing edge of the wing.
13. A method of providing an aircraft with a transport component for a Fuel Quantity Indicating System (FQIS), the method comprising:
   fixedly attaching a conduit assembly to a spar in a wing of the aircraft such that the conduit assembly extends through an opening in the spar and towards a longitudinal axis A of the wing; and
   inserting a transport element assembly into the conduit assembly such that the transport element assembly extends through the opening in the spar and towards the longitudinal axis of the wing, wherein the transport element assembly is configured to transport sensor signals indicating one or more characteristics of fuel stored in the wing of the aircraft.
14. The method of clause 13, wherein inserting the transport element assembly into the conduit assembly comprises sliding the transport element assembly through an opening formed in a mounting flange of the conduit assembly.
15. The method of clause 14, wherein inserting the transport element assembly into the conduit assembly further comprises:
   seating a mounting plate disposed proximate a terminal end of the transport element assembly into a cavity formed in a surface of the mounting flange of the conduit assembly; and
   fixedly attaching the mounting plate to the mounting flange.
16. The method of clause 15, further comprising replacing the transport element assembly while the conduit assembly remains fixedly attached to the spar comprising:
   disconnecting the mounting plate from the mounting flange while the mounting flange remains fixedly attached to the spar;
   sliding the transport assembly out of the conduit assembly while the mounting flange remains fixedly attached to the spar;
   sliding a replacement transport element assembly through the opening formed in the mounting flange of the conduit assembly while the mounting flange remains fixedly attached to the spar;
   seating a mounting plate of the replacement transport element assembly into the cavity formed in the surface of the mounting flange; and
   fixedly attaching the mounting plate of the replacement transport element to the mounting flange.
17. The method of clause 14 or clause 15, wherein the transport element assembly comprises one or more bus elements, each bus element having a probe connector terminating the bus element at one end, and wherein the method further comprises communicatively connecting the probe connector to one or more FQIS sensors disposed in a fuel tank formed in the wing of the aircraft.
18. The method of any of clauses 13 to 17, wherein the conduit assembly and the transport element assembly extend towards the longitudinal axis of the wing and in a direction that is normal to a direction of lightning current traveling through the wing.
19. A Fuel Quantity Indicating System (FQIS) for an aircraft, the FQIS comprising:
   a plurality of FQIS sensors, each FQIS sensor configured to provide signals representing one or more characteristics of fuel in a fuel tank formed in a wing of the aircraft;
   a display device configured to display information representing the one or more characteristics of the fuel; and
   one or more transport components operatively connecting the plurality of FQIS sensors to the display device, each transport component comprising:
      a transport element assembly configured to transport the signals provided by the plurality of FQIS sensors to a FQIS calculation device; and
      a conduit assembly configured to be fixedly attached to a spar of the wing and to at least partially sheathe the transport element assembly such that the conduit assembly and the transport element assembly extend through an opening in the spar and towards a longitudinal axis A of the wing.
19a. A Fuel Quantity Indicating System (FQIS) for an aircraft, the FQIS comprising:
   a plurality of FQIS sensors, each FQIS sensor configured to provide signals representing one or more characteristics of fuel in a fuel tank formed in a wing of the aircraft;
   a display device configured to display information representing the one or more characteristics of the fuel; and
   one or more transport components in accordance with clauses 1 to 12.
20. The FQIS of clause 19 or clause 19a, wherein the transport element assembly is configured to be inserted into, and extracted from, the conduit assembly while the conduit assembly remains fixedly attached to the spar, and wherein each of the one or more transport components extend towards the longitudinal axis of the wing and in a direction that is normal to a direction of lightning current traveling through the wing.

## Claims

1. A transport component (110) for a Fuel Quantity Indicating System (FQIS) (40) on an aircraft (10), the transport component comprising:
a transport element assembly (120) configured to transport signals representing one or more characteristics of fuel stored in a fuel tank (50) of the aircraft, wherein the fuel tank is formed in a wing (16) of the aircraft; and
a conduit assembly (140) configured to be fixedly attached to a spar (90a, 90b) of the wing and to at least partially sheathe the transport element assembly such that the conduit assembly and the transport element assembly extend through an opening in the spar and towards a longitudinal axis A of the wing.

2. The transport component of claim 1, wherein the transport element assembly comprises one or more bus elements (124) configured to carry signals, and wherein a terminal end of each bus element includes a probe connector (126) configured to communicatively interface the bus element to one or more FQIS sensors (52, 54, 56, 58) disposed within the fuel tank.

3. The transport component of claim 2, wherein the transport element assembly further comprises a conduit liner (122) configured to at least partially sheathe the one or more bus elements.

4. The transport component of claim 3, wherein the transport element assembly further comprises a mounting plate (128) configured to:
seat within a cavity (144) formed in a mounting flange (142) of the conduit assembly; and
fixedly attach the transport element assembly to the conduit assembly.

5. The transport component of claim 4, further comprising a fuel seal (134) disposed between a surface of the mounting plate and a surface of the mounting flange, wherein the surface of the mounting plate and the surface of the mounting flange face each other.

6. The transport component of claim 4 or claim 5, wherein the transport element assembly further comprises an interface transition element (130) disposed proximate a terminal end of the transport element assembly and a connector (132) configured to communicatively connect each of the one or more bus elements to a sensor data processing device (60) associated with the aircraft.

7. The transport component of any preceding claim, wherein the conduit assembly comprises a mounting flange (142) configured to fixedly attach the conduit assembly to the spar, the mounting flange comprising:
a cavity (144) formed to at least partially receive a mounting plate (128) of the transport element assembly; and
a base conduit (148) configured to extend through the opening in the spar and towards the longitudinal axis of the wing.

8. The transport component of claim 7, wherein the conduit assembly further comprises a conduit housing (150) that at least partially sheathes the transport element assembly.

9. The transport component of claim 8, wherein the conduit assembly further comprises a conduit coupler (152) configured to connect the conduit housing to the base conduit on the mounting flange.

10. The transport component of any preceding claim, wherein the conduit assembly and the transport element assembly further extend through the wing in a direction that is normal to a direction of lightning current traveling through the wing, and/or, wherein the transport element assembly is configured to be inserted into, and extracted from, the conduit assembly while the conduit assembly remains fixedly attached to the spar, and/or, wherein the conduit assembly is configured to fixedly attach to one of a first spar (90a) disposed at a leading edge of the wing and a second spar (90b) disposed at a trailing edge of the wing.

11. A method (170, 180) of providing an aircraft (10) with a transport component (110) for a Fuel Quantity Indicating System (FQIS) (40), the method comprising:
fixedly attaching (172) a conduit assembly (140) to a spar (90a, 90b) in a wing (16) of the aircraft such that the conduit assembly extends through an opening in the spar and towards a longitudinal axis A of the wing; and
inserting (174) a transport element assembly (120) into the conduit assembly such that the transport element assembly extends through the opening in the spar and towards the longitudinal axis of the wing, wherein the transport element assembly is configured to transport sensor signals indicating one or more characteristics of fuel stored in the wing of the aircraft.

12. The method of claim 11, wherein inserting the transport element assembly into the conduit assembly comprises sliding the transport element assembly through an opening (146) formed in a mounting flange (142) of the conduit assembly, optionally, wherein inserting the transport element assembly into the conduit assembly further comprises:
seating (176) a mounting plate (128) disposed proximate a terminal end of the transport element assembly into a cavity (144) formed in a surface of the mounting flange of the conduit assembly; and
fixedly attaching (178) the mounting plate to the mounting flange, optionally, further comprising replacing the transport element assembly while the conduit assembly remains fixedly attached to the spar comprising:
disconnecting (182) the mounting plate from the mounting flange while the mounting flange remains fixedly attached to the spar;
sliding (184) the transport assembly out of the conduit assembly while the mounting flange remains fixedly attached to the spar;
sliding (186) a replacement transport element assembly through the opening formed in the mounting flange of the conduit assembly while the mounting flange remains fixedly attached to the spar;
seating (188) a mounting plate of the replacement transport element assembly into the cavity formed in the surface of the mounting flange; and
fixedly attaching (190) the mounting plate of the replacement transport element to the mounting flange, and/or, wherein the transport element assembly comprises one or more bus elements (124), each bus element having a probe connector (126) terminating the bus element at one end, and wherein the method further comprises communicatively connecting the probe connector to one or more FQIS sensors (52, 54, 56, 58) disposed in a fuel tank (50) formed in the wing of the aircraft.

13. The method of claim 11 or claim 12, wherein the conduit assembly and the transport element assembly extend towards the longitudinal axis of the wing and in a direction that is normal to a direction of lightning current traveling through the wing.

14. A Fuel Quantity Indicating System (FQIS) (40) for an aircraft (10), the FQIS comprising:
a plurality of FQIS sensors (52, 54, 56, 58), each FQIS sensor configured to provide signals representing one or more characteristics of fuel in a fuel tank (50) formed in a wing (16) of the aircraft;
a display device (70, 80) configured to display information representing the one or more characteristics of the fuel; and
one or more transport components (110) operatively connecting the plurality of FQIS sensors to the display device, each transport component comprising:
a transport element assembly (120) configured to transport the signals provided by the plurality of FQIS sensors to a FQIS calculation device (60); and
a conduit assembly (140) configured to be fixedly attached to a spar (90a, 90b) of the wing and to at least partially sheathe the transport element assembly such that the conduit assembly and the transport element assembly extend through an opening in the spar and towards a longitudinal axis A of the wing.

15. The FQIS of claim 14, wherein the transport element assembly is configured to be inserted into, and extracted from, the conduit assembly while the conduit assembly remains fixedly attached to the spar, and wherein each of the one or more transport components extend towards the longitudinal axis of the wing and in a direction that is normal to a direction of lightning current traveling through the wing.
